# EUROPÄISCHE PATENTSCHRIFT

(11) **EP 2 199 193 B1**
(45) Veröffentlichungstag und Bekanntmachung des Hinweises auf die Patenterteilung: **06.04.2011**
(21) Anmeldenummer: 08172554.1
(22) Anmeldetag: 22.12.2008
(51) Int. Cl.: B62J 31/00

(54) **Vorrichtung und Verfahren zur Schmierung eines Kettentriebs**
Device and method for lubricating a chain drive
Dispositif et procédé destinés à la lubrification d'un entraînement de chaîne

(43) Veröffentlichungstag der Anmeldung: 23.06.2010
(73) Patentinhaber: Schunk Kohlenstofftechnik GmbH, 35452 Heuchelheim (DE)
(72) Erfinder: Karimi-Tabatabai, Mohammad, 35396, Gießen (DE); Fleischhauer, Guntram, 35102, Lohra-Kirchvers (DE); Tabellion, Jan, 35460, Staufenberg (DE); Koch, Werner, 70563, Stuttgart (DE); Nägele, Michael, 72141, Walddorfhäslach (DE)
(74) Vertreter: Tappe, Hartmut

(56) Entgegenhaltungen:
- DE-A1- 3 639 389
- JP-A- 8 207 870
- US-A- 603 654
- US-A- 3 515 013
- US-A- 4 194 413
- US-A- 4 891 037

## Beschreibung

Die Erfindung betrifft eine Applikationsvorrichtung und ein Verfahren zur Schmierung eines Kettentriebs, insbesondere für Kraftradkettentriebe oder dergleichen.

Kettentriebe bedürfen bekanntermaßen einer regelmäßigen Schmierung mit einem Schmierstoff, wobei ein viskoser Schmierstoff oder ein Festschmierstoff Verwendung finden kann. Viskose Schmierstoffe weisen insbesondere den Nachteil auf, dass Verunreinigungen, wie zum Beispiel Staub, Sand etc., aufgrund eines vom Schmierstoff ausgebildeten Schmierfilms auf dem Kettentrieb leicht anhaften können. Diese Verunreinigungen haben eine abrasive Wirkung auf Gleitflächenpaarungen des Kettentriebs und befördern somit einen frühzeitigen Verschleiß desselben. Insbesondere Kettentriebe, die rauen Umgebungsbedingungen ausgesetzt sind, wie beispielsweise Kraftradkettentriebe, Fahrradkettentriebe oder dergleichen, unterliegen daher vergleichsweise kurzen Wartungs- bzw. Instandhaltungsintervallen.

Weiter sind aus dem Stand der Technik Festschmierstoffen umfassende Applikationsvorrichtungen bekannt, die gegen Teile eines Kettentriebs zur Anlage gebracht werden können. Demgemäß erfolgt ein Auftrag eines Festschmierstoffs auf den Kettentrieb ohne Bildung eines Schmierfilms, wodurch eine Aufnahme von Schmutz aus einer Umgebung verhindert werden kann. Der Festschmierstoff wird dazu auf Teile des Kettentriebs mittels einer Bürste auf den Kettentrieb appliziert. Nachteilig dabei ist, dass eine bei Fahrzeugkettentrieben regelmäßig hohe Relativgeschwindigkeit einer Kette bzw. von mit der Kette in Eingriff stehenden Zahnrädern, eine zuverlässige Applikation des Schmierstoffs verhindert. Auch eine unter Vorspannung auf ein Teil eines Kettentriebs einwirkende Applikationsvorrichtung beeinflusst Laufeigenschaften des Kettentriebs durch so verursachte bzw. induzierte Schwingungen bzw. durch Reibung negativ. Darüber hinaus wird ein Schmierstoffdepot durch einen in diesem Zusammenhang erzeugten Anpressdruck auf den Kettentrieb vergleichsweise schnell aufgebraucht. Auch sind die bekannten Applikationsvorrichtungen so ausgebildet, dass sie aufgrund ihrer Gestalt kaum innerhalb eines Kettentriebs in geeigneter Weise positioniert werden könnten. Insbesondere bei Kraftradkettentrieben steht wenig Raum zur Positionierung einer Applikationsvorrichtung zur Verfügung, da der Kettentrieb regelmäßig um eine Achse einer Schwinge eines Hinterrades herumgeführt ist, derart, dass sich die Schwinge innerhalb der geschlossenen Kette des Kettentriebs befindet. Außerdem ermöglicht die Schwinge eine Bewegung eines Abtriebzahnrades um die Achse der Schwinge, wodurch eine Position der Kette relativ zu einem ortsfesten Rahmen bzw. zu einem Antriebszahnrad ständig verändert werden kann. So ist es kaum möglich eine Applikationsvorrichtung ortsfest zu montieren, ohne dass ein ohnehin ständigen Lastwechseln ausgesetzter Lauf der Kette nicht von der Applikationsvorrichtung negativ beeinflusst wird.

Aus der US 4,891,037, die als nächstliegender Stand der Technik angesehen wird, ist eine Applikationsvorrichtung zur Schmierung eines Fahrradkettentriebss bekannt, welche eine Führungseinrichtung für eine Kette aufweist. Die Führungseinrichtung ist als eine Hülse ausgebildet, in der ein Absorptionsmaterial mit einem flüssigen Schmierstoff aufgenommen ist. Eine Kette ist mit dem Absorptionsmaterial kontaktierbar, so dass der Schmierstoff auf die Kette applizierbar ist. Die Kette wird durch Öffnungen in Enden der Hülse geführt.

Aus der US 603,654 ist ebenfalls eine Applikationsvorrichtung zur Schmierung eines Fahrradkettentriebs bekannt, bei der ein mit Schmierstoff getränktes Absorptionsmaterial in einem Gehäuse aufgenommen ist und quer zu einer Laufrichtung einer Kette mit dieser kontaktiert wird. Es ist daher Aufgabe der Erfindung eine Applikationsvorrichtung und ein Verfahren zur Schmierung eines Kettentriebs vorzuschlagen, welche bzw. welches ein Laufverhalten eines Kettentriebs nicht wesentlich beeinflusst und dennoch eine einfache und zuverlässige Schmierung des Kettentriebs ermöglicht.

Diese Aufgabe wird durch eine Applikationsvorrichtung mit den Merkmalen des Anspruchs 1 und durch ein Verfahren mit den Merkmalen des Anspruchs 29 gelöst.

Die erfindungsgemäße Applikationsvorrichtung zur Schmierung eines Kettentriebs, insbesondere für Kraftradkettentriebe oder dergleichen, umfasst eine Schieneneinrichtung, wobei die Schieneneinrichtung mit ihrer Längsseite gegen eine Kette des Kettentriebs zur Anlage bringbar ist, und einen mit der Kette kontaktierbaren Kontaktbereich aufweist, wobei zumindest der Kontaktbereich aus einem konsumierbaren Festschmierstoff gebildet ist, der auf die Kette applizierbar ist.

Da insbesondere die Schieneneinrichtung gegenüber einer nur punktuell mit einer Kette in Eingriff stehenden Applikationsvorrichtung über einen vergleichsweise langen Kontaktbereich .verfügt, wird ein Lauf der Kette, selbst bei hohen Relativgeschwindigkeiten, nicht wesentlich beeinflusst. Dies wird insbesondere dadurch bewirkt, dass die Schieneneinrichtung eine Mehrzahl von Kettengliedern gleichzeitig kontaktieren kann, was einen ruhigeren Lauf der Kette begünstigt. Eine derartige Schieneneinrichtung ist insofern auch bei Lastwechseln vorteilhaft, da die Kette dann mittels der Schieneneinrichtung stabilisiert wird. Auch werden hohe Relativgeschwindigkeiten der Kette ermöglicht, da ein möglicher, zur Verfügung stehender Kontaktbereich vergleichsweise groß ist, was eine zuverlässige und reibungsarme Schmierung der Kette sicherstellt.

Wenn die Schieneneinrichtung zumindest ein Führungselement aufweist, kann mittels der Applikationsvorrichtung eine sichere Führung der Kette und somit ein schwingungsarmes, geradliniges Laufverhalten derselben gewährleistet werden.

Das Führungselement kann in einer Ausführungsform plattenförmig ausgebildet sein. Durch seine plattenförmige Ausgestaltung kann das Führungselement besonders einfach ausgebildet werden. So kann beispielsweise allein das plattenförmige Führungselement die Schieneneinrichtung ausbilden.

Besonders vorteilhaft ist es, wenn das Führungselement so ausgebildet ist, dass es den Kontaktbereich ausbildet und mit Hülsen einer Kette kontaktierbar ist. So kann ein unmittelbarer Auftrag des Festschmierstoffs auf die Verschleißteile bzw. die in einem Kontakteingriff stehenden Bauteile des Kettentriebs gewährleistet werden. Weiter kann das Führungselement in seiner Breite so bemessen sein, dass auch Innenlaschen der Kette mit dem Führungselement kontaktierbar sind, so dass eine Schmierung der Innenlaschen sowie eine zuverlässige Seitenführung der Kette gewährleistet werden kann.

Das Führungselement kann weiter in Längsrichtung eine Steigung ausbilden. Die Kette kann dann in Laufrichtung unter einem spitzen Winkel an die Schieneneinrichtung herangeführt werden, so dass eine Kontaktpaarung zwischen Kette und Schieneneinrichtung in kaum merklicher Weise bzw. ohne wesentlichen Einfluss auf die Laufeigenschaften der Kette hergestellt werden kann.

In einer weiteren Ausführungsform kann die Schieneneinrichtung äußere Führungselemente aufweisen, die so ausgebildet sind, dass sie Außenlaschen einer Kette zwischen sich aufnehmen können. Durch die äußeren Führungselemente kann eine Führung der Kette in der Schieneneinrichtung noch weiter verbessert werden. Auch kann ein durch beispielsweise Lastwechsel bewirktes Herausspringen der Kette aus der Schieneneinrichtung oder Seitenbewegungen bzw. ein Schwingen der Kette in eine seitliche Richtung vermieden werden.

Weiter kann die Schieneneinrichtung dann einen Verbindungsabschnitt zur Verbindung der Führungselemente aufweisen. Ein Verbindungsabschnitt bzw. -abschnitte, kann bzw. können einen Boden der Schieneneinrichtung ausbilden, der bei einem Verbrauch des Festschmierstoffs mit den Laschen der Kette zur Anlage gelangt und eine weitere Bewegung der Kette quer zur Laufrichtung begrenzt.

Auch kann es vorteilhaft sein, wenn die Schieneneinrichtung mehrteilig ausgebildet ist. Die Schieneneinrichtung kann dann aus verschiedenen Bauteilen ausgebildet sein, die wiederum jeweils aus verschiedenen Materialien bestehen können. So können beispielsweise die nicht primär zur Schmierung der Kette dienenden Bauteile der Schieneneinrichtung aus einem Kunststoffmaterial mit besonderen Gleiteigenschaften ausgebildet werden. Auch besteht so die Möglichkeit, abgenutzte Bauteile bzw. ein verbrauchtes Festschmierstoffstück unabhängig von den übrigen Bauteilen der Schieneneinrichtung auszutauschen.

Eine derartige Schieneneinrichtung ist besonders einfach herstellbar, wenn die Schieneneinrichtung als eine Stapelanordnung von Führungselementen mit Verbindungsabschnitten ausgebildet ist. Die Führungselemente und die Verbindungsabschnitte können dann als jeweils flache Bauteile ausgeführt sein, die zu einem Stapel aneinander gefügt die Schieneneinrichtung ausbilden.

Eine besonders sichere Führung der Kette wird ermöglicht, wenn die Schieneneinrichtung zumindest ein weiteres Führungselement aufweist, welches ein Abdeckelement ausbildet, derart, dass eine Kette quer zu einer Bewegungsrichtung allseitig von der Schieneneinrichtung umfassbar ist. Das Abdeckelement kann demnach eine sonst offene Seite der Schieneneinrichtung derart abdecken, dass die Kette quer zur Laufrichtung vollständig von der Schieneneinrichtung zumindest teilweise umgeben ist. Mögliche Bewegungen der Kette quer zur Laufrichtung können so vollständig begrenzt werden.

In einer weiteren Ausführungsform kann die Schieneneinrichtung monolithisch ausgebildet sein. Die Schieneneinrichtung kann dann besonders einfach und kostengünstig, beispielsweise in Art eines Profils, hergestellt werden.

Zur weiteren Beeinflussung von Laufeigenschaften der Kette kann der Kontaktbereich in Längsrichtung zumindest zwei Kontaktteilbereiche unterschiedlicher Geometrie aufweisen. Auch kann eine derartige Ausbildung eines Kontaktbereiches ein Einlaufen einer Kette mit der Applikationsvorrichtung bzw. ein Abnutzungsverhalten des Kontaktbereiches berücksichtigen.

So kann die Schieneneinrichtung zumindest teilweise einen in Längsrichtung ebenen Kontaktbereich ausbilden. Ein ebener Kontaktbereich ermöglicht insbesondere eine gerade Führung einer Kette.

Auch kann die Schieneneinrichtung zumindest teilweise einen in Längsrichtung konvexen Kontaktbereich ausbilden. Die Kette kann dann in Laufrichtung unter einem spitzen Winkel dem Kontaktbereich zu- bzw. abgeführt werden. Auch kann so sichergestellt werden, dass die Kette den Kontaktbereich zumindest tangiert.

Um die Schieneneinrichtung innerhalb eines Kettentriebs in geeigneter Weise positionieren zu können, kann es vorteilhaft sein, wenn die Schieneneinrichtung zumindest eine Keilstumpfform ausbildet. Da Kettentriebe oftmals Zahnräder mit unterschiedlichen Teilkreisdurchmessern aufweisen, kann die Schieneneinrichtung dann einen so zwischen einer Befestigungsebene von Zahnradachsen und der Kette gebildeten Winkel ausgleichen.

Ebenfalls ist es vorteilhaft, wenn die Schieneneinrichtung gegen einen Lasttrum einer Kette zur Anlage bringbar ist. Ein Lasttrum ist gegenüber einem Leertrum bei gleich bleibender Laufrichtung der Kette und von Lastwechseln abgesehen regelmäßig gerade gespannt, so dass der Kontaktbereich der Schieneneinrichtung weniger unregelmäßigen Querbewegungen bzw. Querkräften der Kette ausgesetzt ist und daher weniger schnell verschleißt.

Dem gegenüber kann die Schieneneinrichtung gegen einen Leertrum einer Kette zur Anlage bringbar sein. Ein Leertrum reagiert auf Erschütterungen des Kettentriebs, beispielsweise bei einem Off-Road Betrieb eines Fahrzeuges, und Lastwechsel regelmäßig durch Schwingen oder Schlagen der Kette. Die Schieneneinrichtung kann daher ein Schwingen oder Schlagen der Kette begrenzen oder mindern, wenn die Schieneneinrichtung an dem Leertrum angeordnet ist.

Um eine genaue Positionierung der Applikationsvorrichtung gegenüber der Kette sicherzustellen, kann die Applikationsvorrichtung eine Halteeinrichtung zur Positionierung und Halterung der Schieneneinrichtung relativ zu einer Kette aufweisen. Auch kann bei einer mehrteiligen Schieneneinrichtung die Halteeinrichtung so ausgebildet sein, dass die Halteeinrichtung die Bauteile der Schieneneinrichtung relativ zueinander fixiert.

Weiter kann die Halteeinrichtung so ausgebildet sein, dass sie mit einer Schwinge eines Kraftrades verbindbar ist. So kann die Halteeinrichtung beispielsweise die Schieneneinrichtung relativ nahe einer Drehachse der Schwinge positionieren, so dass eine annähernd in Laufrichtung parallele Führung der Schieneneinrichtung relativ zu einer Kette bei einer Bewegung der Schwinge zusammen mit der Kette gewährleistet ist. Auch kann die Halteeinrichtung eventuell unterschiedliche Orientierungen der Kette relativ zur Gestallt der Schwinge ausgleichen.

In diesem Zusammenhang ist es vorteilhaft, wenn die Schieneneinrichtung relativ zur Halteeinrichtung mittels einer Stelleinrichtung in ihrer Höhe variierbar ist. Die Schieneneinrichtung kann, beispielsweise mittels einer Feder, Schraube oder eines Keils, wahlweise gegenüber der Kette positioniert werden. Ein Verschleiß der Schieneneinrichtung kann dann durch eine geänderte Positionierung der Schieneneinrichtung ausgeglichen werden. Ebenso ist es möglich, einen wirksamen Kontaktbereich oder eine Kontaktkraft in gewünschter Weise zu verändern.

Vorteilhaft kann die Halteeinrichtung so ausgebildet sein, dass zumindest der konsumierbare Festschmierstoff austauschbar ist. Ein verschlissenes Festschmierstoffstück kann dann besonders einfach ausgewechselt werden. Vorzugsweise kann die Halteeinrichtung das Festschmierstoffstück so haltern, dass ein Auswechseln ohne Zuhilfenahme von Werkzeug ermöglicht wird.

Insbesondere kettengetriebene Krafträder verfügen regelmäßig über einen Schwingenschutz der auf einer, einer Kette zugewandten Seite der Schwinge in Nähe eines Antriebszahnrades angeordnet ist. Der Schwingenschutz soll bei Lastwechseln bzw. Schwingenbewegungen einen unmittelbaren Kontakt von Kette und Schwinge vermeiden und so die Kette bzw. die Schwinge vor Beschädigungen schützen. Insofern ist es vorteilhaft, wenn die Applikationsvorrichtung so ausgebildet ist, dass sie als ein Schwingenschutz für ein Kraftrad nutzbar ist, wodurch auf eine Verwendung eines gesonderten Schwingenschutzes verzichtet werden kann.

Die Applikationseinrichtung kann auch so ausgebildet sein, dass sie als eine Kettenführung für ein Kraftrad nutzbar ist. Insbesondere eine Anordnung der Kettenführung in Nähe des Abtriebszahnrads hat sich als vorteilhaft erwiesen. So kann insbesondere in der Nähe des Abtriebszahnrads ein unerwünschtes Schlagen der Kette im Bereich des Leertrums verhindert werden. Die Kettenführung dient dabei primär einer Führung der Kette, wobei mittels der Kettenführung eine Schmierung der Kette durchgeführt werden kann. Eine konventionelle Kettenführung kann demzufolge ergänzend mit einer Schieneneinrichtung ausgestattet sein, die eine Führungsfunktion gewährleistet.

Als besonders vorteilhaft hinsichtlich der Schmiereigenschaften und des Abriebsverhaltens als Voraussetzung zur Übertragung des Schmierstoffs auf die Kette erweist es sich, wenn der Festschmierstoff auf Graphit-Basis hergestellt ist.

Die vorteilhaften Schmier- und Abriebseigenschaften von Graphit sind auch dann erzielbar, wenn der Festschmierstoff zumindest teilweise aus Graphit und im Übrigen aus weiteren Beimischungen besteht, die eine Einstellung weiterer gewünschter Eigenschaften des Festschmierstoffs ermöglichen. So sind auch unabhängig von der ausschließlichen oder anteiligen Verwendung eines Graphitwerkstoffs zur Ausbildung des Festschmierstoffs andere geeignete zusätzliche Substanzen verwendbar, wie beispielsweise Molybdänsulfid, Wolframdisulfid, Polytetrafluorethylen, Tricalciumphosphat, Calciumhydroxid, Polyethylen, Polyamid. Darüber hinaus ist auch die Verwendung von Weichmetallen, wie beispielsweise Blei, Kupfer, Antimon, denkbar. Hinsichtlich der Ausbildung des Festschmierstoffs auf Graphit-Basis erweisen sich insbesondere Beimischungen von Teflon, Kupfer, Blei, Antimon- und Molybdändisulfid als vorteilhaft.

Unabhängig von der Auswahl eines geeigneten Zusatzmaterials ist es vorteilhaft, wenn der Festschmierstoff einen verschleißmindernden Zusatz, wie beispielsweise Polytetrafluorethylen, enthält. So kann ein möglicherweise unerwünschter, zu starker Verschleiß des Festschmierstoffs begrenzt werden.

Ebenso erweist es sich als vorteilhaft, wenn der Festschmierstoff einen korrosionshemmenden Zusatz enthält, mit dem die Korrosionsbeständigkeit des Kettentriebs, insbesondere im Bereich von Eingriffsoberflächen, verbessert werden kann.

Um einen sequentiellen oder zeitlich aufeinander folgenden Einsatz unterschiedlicher Materialzusammensetzungen des Festschmierstoffs zu ermöglichen, erweist es sich als vorteilhaft, wenn der Festschmierstoff einen Schichtaufbau aufweist, mit in ihrer Zusammensetzung unterschiedlichen Schichten. In diesem Zusammenhang sind auch Anwendungsfälle denkbar, in denen sich der Zusatz eines Mittels zum Festschmierstoff als vorteilhaft erweist, dass in einem regelmäßigen Nutzungsintervall des Kettentriebs eine Möglicherweise ausgebildete Korrosionsschicht entfernen kann.

Bei dem erfindungsgemäßen Verfahren zur Schmierung eines Kettentriebs, insbesondere für Kraftradkettentriebe oder dergleichen, mit einer eine Schieneneinrichtung umfassenden Applikationsvorrichtung, wird die Schieneneinrichtung mit einem Kontaktbereich ihrer Längsseite gegen eine Kette des Kettentriebs zur Anlage gebracht, wobei zumindest der Kontaktbereich aus einem konsumierbaren Festschmierstoff gebildet ist, der auf die Kette appliziert wird.

Weitere vorteilhafte Ausführungsformen des Verfahrens ergeben sich aus den Merkmalsbeschreibungen der auf den Vorrichtungsanspruch 1 rückbezogenen Unteransprüche.

Nachfolgend wird eine bevorzugte Ausführungsform der Erfindung unter Bezugnahme auf die beigefügte Zeichnung näher erläutert.

Es zeigen:
- **Fig. 1**: eine schematische Darstellung eines Kettentriebs eines Kraftrades in einer Vorderansicht;
- **Fig. 2**: eine schematische Darstellung des Kettentriebs aus **Fig. 1** in einer Draufsicht;
- **Fig. 3**: eine Schnittansicht einer Applikationsvorrichtung entlang einer Linie III-III aus **Fig. 4****;**
- **Fig. 4**: eine Vorderansicht einer Applikationsvorrichtung;
- **Fig. 5**: eine Seitenansicht einer ersten Ausführungsform einer Schieneneinrichtung mit einer Kette;
- **Fig. 6**: eine Seitenansicht einer zweiten Ausführungsform einer Schieneneinrichtung;
- **Fig. 7**: eine Seitenansicht einer dritten Ausführungsform einer Schieneneinrichtung;
- **Fig. 8**: eine Vorderansicht einer vierten Ausführungsform einer Schieneneinrichtung;
- **Fig. 9**: eine Seitenansicht der vierten Ausführungsform der Schie- neneinrichtung;
- **Fig. 10**: eine Schnittansicht entlang einer Linie X-X aus **Fig. 11** einer fünften Ausführungsform einer Schieneneinrichtung;
- **Fig. 11**: eine Seitenansicht der fünften Ausführungsform der Schieneneinrichtung;
- **Fig. 12**: eine Vorderansicht einer sechsten Ausführungsform einer Schieneneinrichtung;
- **Fig. 13**: eine Seitenansicht der sechsten Ausführungsform der Schieneneinrichtung;
- **Fig. 14**: eine Schnittansicht entlang einer Linie XIV-XIV aus **Fig. 15** einer siebten Ausführungsform einer Schieneneinrich- tung;
- **Fig. 15**: eine Seitenansicht der fünften Ausführungsform der Schieneneinrichtung;
- **Fig. 16**: eine Schnittansicht entlang einer Linie XVI-XVI aus **Fig. 17** einer achten Ausführungsform einer Schieneneinrich- tung;
- **Fig. 17**: eine Seitenansicht der achten Ausführungsform der Schie- neneinrichtung;
- **Fig. 18**: eine Schnittansicht entlang einer Linie XVIII-XVIII aus **Fig. 19** einer neunten Ausführungsform einer Schienenein- richtung;
- **Fig. 19**: eine Seitenansicht der neunten Ausführungsform der Schieneneinrichtung;
- **Fig. 20**: eine Schnittansicht entlang einer Linie XX-XX aus **Fig. 21** einer zehnten Ausführungsform einer Schieneneinrich- tung;
- **Fig. 21**: eine Seitenansicht der zehnten Ausführungsform der Schieneneinrichtung.

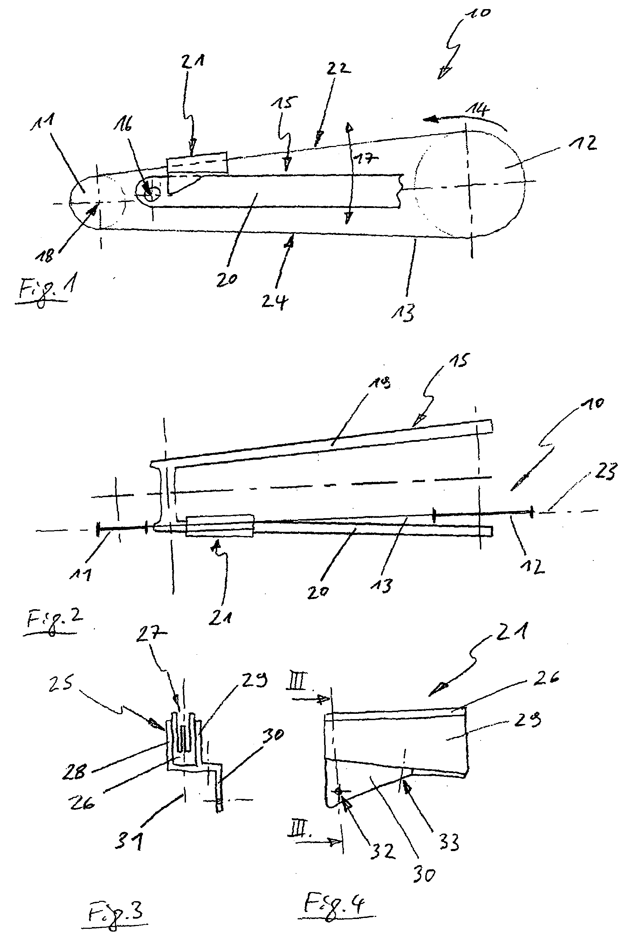

**Fig. 1** zeigt in einer schematischen Darstellung einen Kettentrieb 10 eines nicht weiter dargstellten Kraftrades, welcher aus einem Antriebszahnrad 11, einem Abtriebszahnrad 12 und einer Kette 13 gebildet ist. Eine für die Kette 13 vorgesehene Laufrichtung ist durch einen Pfeil 14 gekennzeichnet. Das Antriebszahnrad 11 ist ortsfest an einem hier nicht näher dargestellten Antrieb eines Kraftrades angeordnet, wobei das Abtriebszahnrad 12 an eine hier andeutungsweise dargestellten Schwinge 15 gelagert ist, welche um eine Schwingenachse 16 verschwenkbar ist. Die Schwinge 15 mit dem Abtriebszahnrad 12 ist demnach entsprechend des Pfeils 17 bewegbar. Da die Schwingenachse 16 in relativer Nähe zu einer Welle 18 des Antriebszahnrads 11 angeordnet ist, wird bei einer Bewegung entsprechend des Pfeils 17 der Schwinge 15 die Kette 13 weitestgehend parallel zur Schwinge 15 mitbewegt.

Wie einer Zusammenschau der **Fig. 1** und 2 zu entnehmen ist, ist die Schwinge 15 aus zwei Kastenprofilen 19 und 20 gebildet, die ein hier nicht näher dargestelltes Hinterrad eines Kraftrades zusammen mit dem Abtriebszahnrad 12 zwischen sich aufnehmen. Weiter ist das Kastenprofil 20 im Wesentlichen innerhalb der Kette 13 angeordnet, wobei insbesondere im Bereich der Schwingenachse 16 das Kastenprofil 20 der Kette 13, aufgrund der regelmäßig geringen Größe des Antriebszahnrads 11, angenähert ist. Im Bereich der Schwingenachse 16 ist am Kastenprofil 20 eine Applikationsvorrichtung 21 montiert, welche von der Kette 13 durchlaufen wird. Die Applikationsvorrichtung 21 gelangt somit an einem Lasttrum 22 der Kette 13, unabhängig von einer Bewegung der Schwinge 15, zur Anlage. Weiter ist die Applikationsvorrichtung 21 so ausgebildet, dass eine hier nicht näher dargestellte Schieneneinrichtung in Übereinstimmung mit einer Ebene 23 des Kettentriebs 10 positioniert ist. Der Lasttrum 22 der Kette 13 ist von Lastwechseln abgesehen gegenüber einem Leertrum 24 der Kette 13 im Wesentlichen gerade gespannt, so dass die Kette 13 von der Applikationsvorrichtung 21 zuverlässig kontaktierbar ist.

Die **Fig. 3** und **4** zeigen die Applikationsvorrichtung 21 aus **Fig. 1** und **2** in einer detaillierteren Darstellung. Die Applikationsvorrichtung 21 ist im Wesentlichen aus einer Halteeinrichtung 25 und einer Schieneneinrichtung 26 gebildet. Die Schieneneinrichtung 26 besteht in diesem Ausführungsbeispiel aus einem konsumierbaren Festschmierstoff, vorzugsweise einem Graphit-Werkstoff, und bildet einen Aufnahmebereich 27 zur Aufnahme und Führung der Kette 13 aus. Die Halteeinrichtung 25 ist aus einem Leichtmetallwerkstoff gebildet und nimmt zwischen zwei Schenkeln 28 und 29 die Schieneneinrichtung 26 auf. Weiter weist die Halteeinrichtung 25 einen Schenkel 30 auf, der so ausgebildet ist, dass die Schieneneinrichtung 26 relativ zur Kette 30 mit einer Symmetrieachse 31 in Übereinstimmung mit der Ebene 23 des Kettentriebs 10 positionierbar ist. Zur Befestigung der Halteeinrichtung 25 am Kastenprofil 20 sind Durchgangsbohrungen 32 und 33 im Schenkel 30 vorgesehen, welche eine hier nicht näher dargestellte Verschraubung der Halteeinrichtung 25 mit dem Kastenprofil 20 ermöglichen.

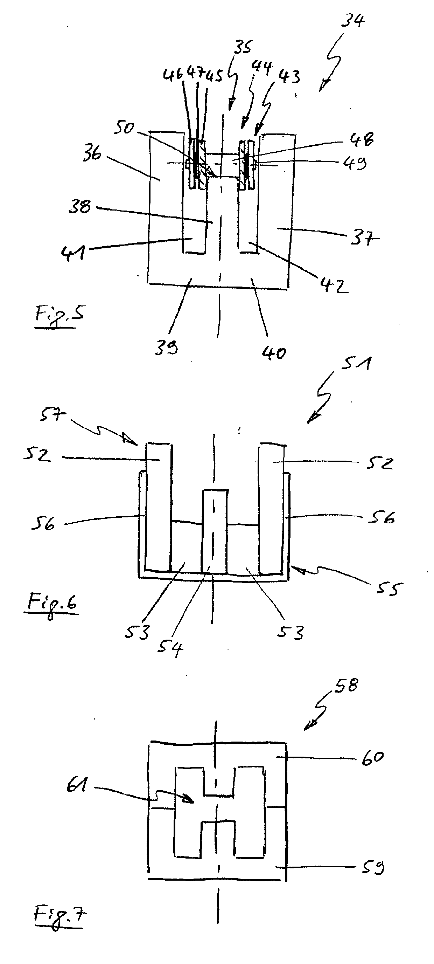

**Fig. 5** zeigt eine Schieneneinrichtung 34 in einer Seitenansicht zusammen mit einer Kette 35 in einer Schnittansicht. Die Schieneneinrichtung 34 ist einstückig ausgebildet und weist zwei äußere Führungselemente 36 und 37 sowie ein Führungselement 38 auf, welche über Verbindungsabschnitte 39 und 40 miteinander verbunden sind. Das Führungselement 38 ist gegenüber den äußeren Führungselementen 36 und 37 in seiner Höhe vergleichsweise niedriger und die Verbindungsabschnitte 39 und 40 sind so ausgebildet, dass zwischen dem Führungselement 38 und dem äußeren Führungselement 36 bzw. zwischen dem Führungselement 38 und dem äußeren Führungselement 37 jeweils Nuten 41 bzw. 42 ausgebildet werden, die an einen Aufnahmebereich 43 für die Kette 35 anschließen. Weiter dienen die äußeren Führungselemente 36 und 37 einer Führung der Kette 35 im Aufnahmebereich 43. Die Kette 35 ist aus einer Vielzahl von miteinander verbundenen Kettengliedern 44 gebildet, welche jeweils aus einem Paar Innenlaschen 45, Außenlaschen 46 und O-Ringen 47 sowie einer Hülse 48 und einer Achse 49 gebildet sind. Insbesondere die Hülse 48 und die Innenlaschen 45 wälzen mit hier nicht gezeigten Zahnrädern eines Kettentriebs ab, so dass diese Bauteile der Kette 35 einer Schmierung bedürfen. Das Führungselement 38 bildet daher einen Kontaktbereich 50 aus, welcher längs der Schieneneinrichtung 34 orientiert ist, und bei einem Durchlauf der Kette 35 durch die Schieneneinrichtung 34 eine Applikation von Festschmierstoff durch einen abrasiven Abtrag desselben vom Führungselement 38 gewährleistet. Wenn die Innenlaschen 45 und die Außenlaschen 46 an den Verbindungsabschnitten 39 und 40 zur Anlage gelangen, ist das Führungselement 38 aufgebraucht.

**Fig. 6** zeigt eine zweite Ausführungsform einer Schieneneinrichtung 51, bei der die Schieneneinrichtung 51 mehrteilig ausgebildet ist und aus übereinstimmend ausgebildeten äußeren Führungselementen 52, Verbindungsabschnitten 53, einem Führungselement 54 und einem U-Profil 55 gebildet ist. Das U-Profil 55 nimmt die äußeren Führungselemente 52, die Verbindungsabschnitte 53 und das Führungselement 54 zwischen Schenkeln 56 des U-Profils 55 in Art einer Stapelanordnung 57 auf und fixiert diese relativ zueinander. Ist das Führungselement 54 aufgebraucht, kann es gegen ein neues Führungselement 54 ausgetauscht werden, ohne dass die Schieneneinrichtung 51 vollständig ausgewechselt werden müsste.

Eine dritte Ausführungsform einer Schieneneinrichtung 58 zeigt **Fig. 7****,** wobei die Schieneneinrichtung 58 ein Unterteil 59, welches zur Schmierung einer hier nicht dargestellten Kette dient, und ein als Abdeckelement ausgebildetes Oberteil 60 umfasst. Das Unterteil 59 ist in Art der in **Fig. 5** dargestellten Schieneneinrichtung ausgebildet und mit dem Oberteil 60, welches wiederum in Art des Unterteils 59 ausgebildet ist, so abgedeckt bzw. verbunden, dass eine Kette in einem so zwischen dem Unterteil 59 und dem Oberteil 60 ausgebildeten Aufnahmebereich 61 aufnehmbar ist.

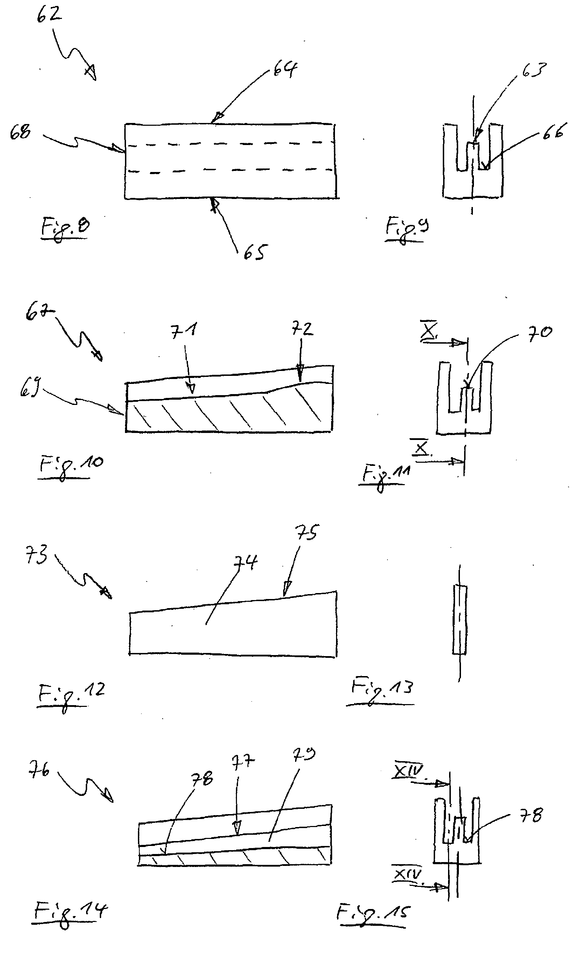

Die **Fig. 8** und **9** zeigen eine Schieneneinrichtung 62, welche im Wesentlichen in Gestalt eines Rechtecks 68 ausgebildet ist. Ein Kontaktbereich 63 verläuft in Längsrichtung der Schieneneinrichtung 62 im Wesentlichen parallel zu Außenseiten 64 und 65 sowie Verbindungsflächen 66 der Schieneneinrichtung 62.

Die in den **Fig. 10** und **11** gezeigte Schieneneinrichtung 67 ist in Gestalt eines Keilstumpfes 69 ausgebildet. Eine Kontaktfläche 70 ist dabei in zwei Kontaktteilbereiche 71 und 72 aufgeteilt, wobei der Kontaktteilereich 71 in Längsrichtung der Schieneneinrichtung 67 eben, und der Kontaktteilbereich 72, an den Kontaktteilbereich 71 anschließend konvex ausgebildet ist. Insbesondere die Ausbildung zweier Kontaktteilbereiche 71 und 72 mit einer voneinander abweichenden Kontaktflächenorientierung dient einer Beeinflussung eines Laufverhaltens einer Kette und kann somit, Schmier- bzw. Führungseigenschaften der Schieneneinrichtung 67 positiv beeinflussen.

Eine Schieneneinrichtung 73 in einer einfachen Ausführungsform zeigen die **Fig. 12** und **13****.** Die Schieneneinrichtung 73 ist hier als ein Führungselement 74 in Gestalt einer einfachen Platte ausgebildet. Eine hier nicht gezeigte Kette läuft lediglich über einen Kontaktbereich 75 des Führungselements 74.

Den **Fig. 14** und **15** ist eine Ausführungsform einer Schieneneinrichtung 76 zu entnehmen, die in Art der in den **Fig. 10** und **11** dargestellten Schieneneinrichtung ausgebildet ist, jedoch im Unterschied dazu einen ebenen Kontaktbereich 77 aufweist, der relativ zu einer Verbindungsfläche 78 in einem spitzen Winkel geneigt ist. Eine zu der Verbindungsfläche 78 unterschiedlich hohe Ausbildung des Kontaktbereiches 77 trägt insbesondere zu erwartenden, unterschiedlichen Abnutzungen eines Führungselements 79 entlang einer Längserstreckung des Führungselements 79 Rechnung.

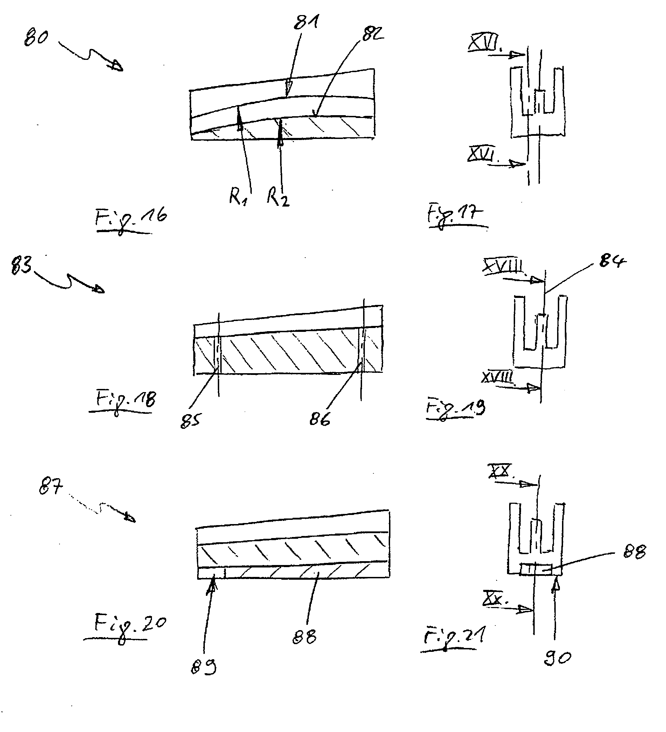

Im Unterschied zu der in den **Fig. 14** und **15** gezeigten Schieneneinrichtung zeigen die **Fig. 16** und **17** eine Schieneneinrichtung 80, bei der ein Kontaktbereich 81 und Verbindungsflächen 82 jeweils in unterschiedlichen Radien R1 und R2 relativ zu einer Längserstreckung der Schieneneinrichtung 80 ausgebildet sind.

Die **Fig. 18** und **19** zeigen eine Schieneneinrichtung 83 die in ihrer Position relativ zu einer hier nicht gezeigten Kette variierbar ist. Die Schieneneinrichtung 83 weist in einer Symmetrieebene 84 angeordnete Gewindebohrungen 85 und 86 auf, in die nicht näher dargestellte Schrauben einsetzbar sind. Die Schrauben können insbesondere zu einer Justage der Schieneneinrichtung 83 bzw. bei einem Verschleiß der Schieneneinrichtung 83 zur Einstellung derselben relativ zu einer Kette genutzt werden.

Eine in den **Fig. 20** und **21** dargestellte Schieneneinrichtung 87 weist eine als Keil 88 ausgebildete Stelleinrichtung auf. Durch eine Verschiebung des Keils 88 in Längsrichtung der Schieneneinrichtung 87 innerhalb einer in einer Außenseite 90 der Schieneneinrichtung 87 ausgebildeten Rechtecknut 89, wird eine Höhenvariation der Schieneneinrichtung 87 relativ zu einer hier nicht gezeigten Kette ermöglicht.

## Patentansprüche

1. Applikationsvorrichtung (21) zur Schmierung eines Kettentriebs (10), insbesondere für Kraftradkettentriebe oder dergleichen,
**dadurch gekennzeichnet,**
**dass** die Applikationsvorrichtung eine Schieneneinrichtung (26, 34, 51, 58, 62, 67, 73, 76, 80, 83, 87) umfasst, wobei die Schieneneinrichtung einen mit der Kette kontaktierbaren Kontaktbereich (50, 63, 71, 72, 75, 77, 81) aufweist, wobei die Schieneneinrichtung mit ihrer Längsseite gegen eine Kette (13, 35) des Kettentriebs zur Anlage bringbar ist, und wobei zumindest der Kontaktbereich aus einem konsumierbaren Festschmierstoff gebildet ist, der auf die Kette applizierbar ist.

2. Applikationsvorrichtung nach Anspruch 1,
**dadurch gekennzeichnet,**
**dass** die Schieneneinrichtung (26, 34, 51, 58, 62, 67, 73, 76, 80, 83, 87) zumindest ein Führungselement (36, 37, 38, 52, 54, 74, 79) aufweist.

3. Applikationsvorrichtung nach Anspruch 2,
**dadurch gekennzeichnet,**
**dass** das Führungselement (36, 37, 38, 52, 54, 74, 79) plattenförmig ausgebildet ist.

4. Applikationsvorrichtung nach einem der Ansprüche 2 oder 3,
**dadurch gekennzeichnet,**
**dass** das Führungselement (38, 54, 74, 79) so ausgebildet ist, dass es den Kontaktbereich (50, 63, 71, 72, 75, 77, 81) ausbildet und mit Hülsen (48) einer Kette (13, 35) kontaktierbar ist.

5. Applikationsvorrichtung nach einem der Ansprüche 2 bis 4,
**dadurch gekennzeichnet,**
**dass** das Führungselement (38, 54, 74, 79) in Längsrichtung eine Steigung ausbildet.

6. Applikationsvorrichtung nach einem der Ansprüche 2 bis 5,
**dadurch gekennzeichnet,**
**dass** die Schieneneinrichtung (26, 34, 51, 58, 62, 67, 76, 80, 83, 87) äußere Führungselemente (36, 37, 52) aufweist, die so ausgebildet sind, dass sie Außenlaschen (46) einer Kette (13, 35) zwischen sich aufnehmen können.

7. Applikationsvorrichtung nach Anspruch 6,
**dadurch gekennzeichnet,**
**dass** die Schieneneinrichtung (26, 34, 51, 58, 62, 67, 73, 76, 80, 83, 87) einen Verbindungsabschnitt (39, 40, 53) zur Verbindung der Führungselemente (36, 37, 38, 52, 54, 79) aufweist.

8. Applikationsvorrichtung nach einem der Ansprüche 2 bis 7,
**dadurch gekennzeichnet,**
**dass** die Schieneneinrichtung (51) mehrteilig ausgebildet ist.

9. Applikationsvorrichtung nach Anspruch 8,
**dadurch gekennzeichnet,**
**dass** die Schieneneinrichtung (51) als eine Stapelanordnung (57) von Führungselementen (52, 54) mit Verbindungsabschnitten (53) ausgebildet ist.

10. Applikationsvorrichtung nach einem der Ansprüche 2 bis 9,
**dadurch gekennzeichnet,**
**dass** die Schieneneinrichtung (58) zumindest ein weiteres Führungselement aufweist, welches ein Abdeckelement (60) ausgebildet, derart, dass eine Kette (13, 35) quer zu einer Bewegungsrichtung allseitig von der Schieneneinrichtung umfassbar ist.

11. Applikationsvorrichtung nach einem der Ansprüche 1 bis 7,
**dadurch gekennzeichnet,**
**dass** die Schieneneinrichtung (26, 34, 58, 62, 67, 73, 76, 80, 83, 87) monolithisch ausgebildet ist.

12. Applikationsvorrichtung nach einem der vorangehenden Ansprüche,
**dadurch gekennzeichnet,**
**dass** der Kontaktbereich in Längsrichtung zumindest zwei Kontaktteilbereiche (71, 72) unterschiedlicher Geometrie aufweist.

13. Applikationsvorrichtung nach einem der vorangehenden Ansprüche,
**dadurch gekennzeichnet,**
**dass** die Schieneneinrichtung (26, 34, 51, 58, 62, 67, 73, 76, 83, 87) zumindest teilweise einen in Längsrichtung ebenen Kontaktbereich (50, 63, 71, 75, 77) ausbildet.

14. Applikationsvorrichtung nach einem der vorangehenden Ansprüche,
**dadurch gekennzeichnet,**
**dass** die Schieneneinrichtung (67, 80) zumindest teilweise einen in Längsrichtung konvexen Kontaktbereich (72, 81) ausbildet.

15. Applikationsvorrichtung nach einem der vorangehenden Ansprüche,
**dadurch gekennzeichnet,**
**dass** die Schieneneinrichtung (26, 34, 51, 58, 67, 73, 76, 80, 83, 87) zumindest eine Keilstumpfform ausbildet.

16. Applikationsvorrichtung nach einem der vorangehenden Ansprüche,
**dadurch gekennzeichnet,**
**dass** die Schieneneinrichtung (26, 34, 51, 58, 62, 67, 73, 76, 80, 83, 87) gegen einen Lasttrum (22) einer Kette (13, 35) zur Anlage bringbar ist.

17. Applikationsvorrichtung nach einem der Ansprüche 1 bis 15,
**dadurch gekennzeichnet,**
**dass** die Schieneneinrichtung (26, 34, 51, 58, 62, 67, 73, 76, 80, 83, 87) gegen einen Leertrum (24) einer Kette (13, 35) zur Anlage bringbar ist.

18. Applikationsvorrichtung nach einem der vorangehenden Ansprüche,
**dadurch gekennzeichnet,**
**dass** die Applikationsvorrichtung (21) eine Halteeinrichtung (25) zur Positionierung und Halterung der Schieneneinrichtung (26, 34, 51, 58, 62, 67, 73, 76, 80, 83, 87) relativ zu einer Kette (13, 35) aufweist.

19. Applikationsvorrichtung nach Anspruch 18,
**dadurch gekennzeichnet,**
**dass** die Halteeinrichtung (25) so ausgebildet ist, dass sie mit einer Schwinge (15) eines Kraftrades verbindbar ist.

20. Applikationsvorrichtung nach einem der Ansprüche 18 oder 19,
**dadurch gekennzeichnet,**
**dass** die Schieneneinrichtung (83, 87) relativ zur Halteeinrichtung (25) mittels einer Stelleinrichtung in ihrer Höhe variierbar ist.

21. Applikationsvorrichtung nach einem der Ansprüche 18 bis 20,
**dadurch gekennzeichnet,**
**dass** die Halteeinrichtung (25) so ausgebildet ist, dass zumindest der konsumierbare Festschmierstoff austauschbar ist.

22. Applikationsvorrichtung nach einem der vorangehenden Ansprüche, **dadurch gekennzeichnet,**
**dass** die Applikationsvorrichtung (21) so ausgebildet ist, dass sie als ein Schwingenschutz für ein Kraftrad nutzbar ist.

23. Applikationsvorrichtung nach einem der Ansprüche 1 bis 21,
**dadurch gekennzeichnet,**
**dass** die Applikationsvorrichtung so ausgebildet ist, dass sie als eine Kettenführung für ein Kraftrad nutzbar ist.

24. Applikationsvorrichtung nach einem der vorangehenden Ansprüche,
**dadurch gekennzeichnet,**
**dass** der Festschmierstoff auf Graphit-Basis hergestellt ist.

25. Applikationsvorrichtung nach Anspruch 24,
**dadurch gekennzeichnet,**
**dass** der Festschmierstoff zumindest teilweise Graphit aufweist.

26. Applikationsvorrichtung nach einem der vorangehenden Ansprüche,
**dadurch gekennzeichnet,**
**dass** der Festschmierstoff einen verschleißmindernden Zusatz enthält.

27. Applikationsvorrichtung nach einem der vorangehenden Ansprüche,
**dadurch gekennzeichnet,**
**dass** der Festschmierstoff einen korrosionshemmenden Zusatz enthält.

28. Applikationsvorrichtung nach einem der vorangehenden Ansprüche,
**dadurch gekennzeichnet,**
**dass** der Festschmierstoff einen Schichtaufbau aufweist mit in ihrer Zusammensetzung unterschiedlichen Schichten.

29. Verfahren zur Schmierung eines Kettentriebs (10), insbesondere für Kraftradkettentriebe oder dergleichen, mit einer Applikationsvorrichtung (21),
**dadurch gekennzeichnet,**
**dass** die Applikationsvorrichtung eine Schieneneinrichtung (26, 34, 51, 58, 62, 67, 73, 76, 80, 83, 87) umfasst, wobei die Schieneneinrichtung mit einem Kontaktbereich (50, 63, 71, 72, 75, 77, 81) ihrer Längsseite gegen eine Kette (13, 35) des Kettentriebs zur Anlage gebracht wird, und wobei zumindest der Kontaktbereich aus einem konsumierbaren Festschmierstoff gebildet ist, der auf die Kette appliziert wird.

## Claims

1. Application device (21) for lubricating a chain drive (10), in particular for motorcycle chain drives or the like,
**characterised in that**
the application device comprises a rail device (26, 34, 51, 58, 62, 67, 73, 76, 80, 83, 87), wherein the rail device has a contact region (50, 63, 71, 72, 75, 77, 81) which can be contacted with the chain, wherein the rail device can be brought to bear with its longitudinal side against a chain (13, 35) of the chain drive, and wherein at least the contact region is formed from a consumable solid lubricant which can be applied to the chain.

2. Application device according to Claim 1,
**characterised in that**
the rail device (26, 34, 51, 58, 62, 67, 73, 76, 80, 83, 87) has at least one guide element (36, 37, 38, 52, 54, 74, 79).

3. Application device according to Claim 2,
**characterised in that**
the guide element (36, 37, 38, 52, 54, 74, 79) is plate-shaped.

4. Application device according to one of Claims 2 or 3,
**characterised in that**
the guide element (38, 54, 74, 79) is configured in such a manner that it forms the contact region (50, 63, 71, 72, 75, 77, 81) and can be contacted with bushings (48) of a chain (13, 35).

5. Application device according to one of Claims 2 to 4,
**characterised in that**
the guide element (38, 54, 74, 79) forms a slope in the longitudinal direction.

6. Application device according to one of Claims 2 to 5,
**characterised in that**
the rail device (26, 34, 51, 58, 62, 67, 76, 80, 83, 87) has outer guide elements (36, 37, 52) which are configured in such a manner that they can receive outer lugs (46) of a chain (13, 35) between them.

7. Application device according to Claim 6,
**characterised in that**
the rail device (26, 34, 51, 58, 62, 67, 73, 76, 80, 83, 87) has a connecting section (39, 40, 53) for connecting the guide elements (36, 37, 38, 52, 54, 79).

8. Application device according to one of Claims 2 to 7,
**characterised in that**
the rail device (51) has a multi-part configuration.

9. Application device according to Claim 8,
**characterised in that**
the rail device (51) is configured as a stacked arrangement (57) of guide elements (52, 54) with connecting sections (53).

10. Application device according to one of Claims 2 to 9,
**characterised in that**
the rail device (58) has at least one further guide element which forms a covering element (60) in such a manner that a chain (13, 35) can be enclosed by the rail device on all sides transversely to a direction of movement.

11. Application device according to one of Claims 1 to 7,
**characterised in that**
the rail device (26, 34, 58, 62, 67, 73, 76, 80, 83, 87) is monolithic.

12. Application device according to one of the preceding claims,
**characterised in that**
the contact region has at least two contact subregions (71, 72) of different geometries in the longitudinal direction.

13. Application device according to one of the preceding claims,
**characterised in that**
the rail device (26, 34, 51, 58, 62, 67, 73, 76, 83, 87) forms at least in parts a contact region (50, 63, 71, 75, 77) which is flat in the longitudinal direction.

14. Application device according to one of the preceding claims,
**characterised in that**
the rail device (67, 80) forms at least in parts a contact region (72, 81) which is convex in the longitudinal direction.

15. Application device according to one of the preceding claims,
**characterised in that**
the rail device (26, 34, 51, 58, 67, 73, 76, 80, 83, 87) forms at least one truncated cone shape.

16. Application device according to one of the preceding claims,
**characterised in that**
the rail device (26, 34, 51, 58, 62, 67, 73, 76, 80, 83, 87) can be brought to bear against a pull strand (22) of a chain (13, 35).

17. Application device according to one of Claims 1 to 15,
**characterised in that**
the rail device (26, 34, 51, 58, 62, 67, 73, 76, 80, 83, 87) can be brought to bear against a return strand (24) of a chain (13, 35).

18. Application device according to one of the preceding claims,
**characterised in that**
the application device (21) has a retaining device (25) for positioning and retaining the rail device (26, 34, 51, 58, 62, 67, 73, 76, 80, 83, 87) relative to a chain (13, 35).

19. Application device according to Claim 18,
**characterised in that**
the retaining device (25) is configured in such a manner that it can be connected to a rocker (15) of a motorcycle.

20. Application device according to one of Claims 18 or 19,
**characterised in that**
the rail device (83, 87) can be varied in height relative to the retaining device (25) by means of an adjustment device.

21. Application device according to one of Claims 18 to 20,
**characterised in that**
the retaining device (25) is configured in such a manner that at least the consumable solid lubricant can be replaced.

22. Application device according to one of the preceding claims,
**characterised in that**
the application device (21) is configured in such a manner that it can be used as a rocker protector for a motorcycle.

23. Application device according to one of Claims 1 to 21,
**characterised in that**
the application device is configured in such a manner that it can be used as a chain guide for a motorcycle.

24. Application device according to one of the preceding claims,
**characterised in that**
the solid lubricant is based on graphite.

25. Application device according to Claim 24,
**characterised in that**
the solid lubricant has at least some graphite.

26. Application device according to one of the preceding claims,
**characterised in that**
the solid lubricant contains a wear-reducing additive.

27. Application device according to one of the preceding claims,
**characterised in that**
the solid lubricant contains a corrosion-inhibiting additive.

28. Application device according to one of the preceding claims,
**characterised in that**
the solid lubricant has a layer structure with layers of different composition.

29. Method for lubricating a chain drive (10), in particular for motorcycle chain drives or the like, with an application device (21),
**characterised in that**
the application device comprises a rail device (26, 34, 51, 58, 62, 67, 73, 76, 80, 83, 87), wherein the rail device is brought to bear with a contact region (50, 63, 71, 72, 75, 77, 81) of its longitudinal side against a chain (13, 35) of the chain drive, and wherein at least the contact region is formed from a consumable solid lubricant which is applied to the chain.

## Revendications

1. Dispositif d'application (21) pour le graissage d'une commande de chaîne (10), en particulier pour des commandes de cyclomoteur ou similaires,
**caractérisé en ce que**
le dispositif d'application comprend un dispositif à rails (26, 34, 51, 58, 62, 67, 73, 76, 80, 83, 87), le dispositif à rails présentant une zone de contact (50, 63, 71, 72, 75, 77, 81) pouvant être mise en contact avec la chaîne, le dispositif à rails pouvant venir s'appuyer avec son côté longitudinal contre une chaîne (13, 35) de la commande de chaîne, et au moins la zone de contact étant formée d'un lubrifiant solide consommable, qui peut être appliqué sur la chaîne.

2. Dispositif d'application selon la revendication 1,
**caractérisé en ce que**
le dispositif à rails (26, 34, 51, 58, 62, 67, 73, 76, 80, 83, 87) présente au moins un élément de guidage (36, 37, 38, 52, 54, 74, 79).

3. Dispositif d'application selon la revendication 2,
**caractérisé en ce que**
l'élément de guidage (36, 37, 38, 52, 54, 74, 79) est conçu en forme de plaque.

4. Dispositif d'application selon l'une quelconque des revendications 2 ou 3,
**caractérisé en ce que**
l'élément de guidage (38, 54, 74, 79) est conçu de telle sorte qu'il forme la zone de contact (50, 63, 71, 72, 75, 77, 81) et peut être mis en contact avec des gaines (48) d'une chaîne (13, 35).

5. Dispositif d'application selon l'une quelconque des revendications 2 à 4,
**caractérisé en ce que**
l'élément de guidage (38, 54, 74, 79) forme une pente dans le sens longitudinal.

6. Dispositif d'application selon l'une quelconque des revendications 2 à 5,
**caractérisé en ce que**
le dispositif à rails (26, 34, 51, 58, 62, 67, 76, 80, 83, 87) présente des éléments de guidage (36, 37, 52) extérieurs qui sont conçus de telle sorte qu'ils peuvent réceptionner entre eux des éclisses extérieures (46) d'une chaîne (13, 35).

7. Dispositif d'application selon la revendication 6,
**caractérisé en ce que**
le dispositif à rails (26, 34, 51, 58, 62, 67, 73, 76, 80, 83, 87) présente une partie de liaison (39, 40, 53) pour la liaison des éléments de guidage (36, 37, 38, 52, 54, 79).

8. Dispositif d'application selon l'une quelconque des revendications 2 à 7,
**caractérisé en ce que**
le dispositif à rails (51) est conçu en plusieurs parties.

9. Dispositif d'application selon la revendication 8,
**caractérisé en ce que**
le dispositif à rails (51) est conçu sous forme d'un agencement de pile (57) d'éléments de guidage (52, 54) avec des parties de liaison (53).

10. Dispositif d'application selon l'une quelconque des revendications 2 à 9,
**caractérisé en ce que**
le dispositif à rails (58) présente au moins un autre élément de guidage qui forme un élément de recouvrement (60), de telle sorte qu'une chaîne (13, 35) peut être englobée transversalement à un sens de déplacement de tous côtés par le dispositif à rails.

11. Dispositif d'application selon l'une quelconque des revendications 1 à 7,
**caractérisé en ce que**
le dispositif à rails (26, 34, 58, 62, 67, 73, 76, 80, 83, 87) est conçu de façon monolithe.

12. Dispositif d'application selon l'une quelconque des revendications précédentes,
**caractérisé en ce que**
la zone de contact présente dans le sens longitudinal au moins deux zones partielles de contact (71, 72) de géométrie différente.

13. Dispositif d'application selon l'une quelconque des revendications précédentes,
**caractérisé en ce que**
le dispositif à rails (26, 34, 51, 58, 62, 67, 73, 76, 83, 87) forme au moins en partie une zone de contact (50, 63, 71, 75, 77) plane dans le sens longitudinal.

14. Dispositif d'application selon l'une quelconque des revendications précédentes,
**caractérisé en ce que**
le dispositif à rails (67, 80) forme au moins en partie une zone de contact (72, 81) convexe dans le sens longitudinal.

15. Dispositif d'application selon l'une quelconque des revendications précédentes,
**caractérisé en ce que**
le dispositif à rails (26, 34, 51, 58, 67, 73, 76, 80, 83, 87) forme au moins une forme de bout de clavette.

16. Dispositif d'application selon l'une quelconque des revendications précédentes,
**caractérisé en ce que**
le dispositif à rails (26, 34, 51, 58, 62, 67, 73, 76, 80, 83, 87) peut venir s'appuyer sur un brin chargé (22) d'une chaîne (13, 35).

17. Dispositif d'application selon l'une quelconque des revendications 1 à 15,
**caractérisé en ce que**
le dispositif à rails (26, 34, 51, 58, 62, 67, 73, 76, 80, 83, 87) peut venir s'appuyer sur un brin vide (24) d'une chaîne (13, 35).

18. Dispositif d'application selon l'une quelconque des revendications précédentes,
**caractérisé en ce que**
le dispositif d'application (21) présente un dispositif de retenue (25) pour le positionnement et la fixation du dispositif à rails (26, 34, 51, 58, 62, 67, 73, 76, 80, 83, 87) par rapport à une chaîne (13, 35).

19. Dispositif d'application selon la revendication 18,
**caractérisé en ce que**
le dispositif de retenue (25) est conçu de telle sorte qu'il peut être relié à un bras oscillant (15) d'un cyclomoteur.

20. Dispositif d'application selon l'une quelconque des revendications 18 ou 19,
**caractérisé en ce que**
le dispositif à rails (83, 87) peut être modifié dans sa hauteur par rapport au dispositif de retenue (25) au moyen d'un dispositif de réglage.

21. Dispositif d'application selon l'une quelconque des revendications 18 à 20,
**caractérisé en ce que**
le dispositif de retenue (25) est conçu de telle sorte qu'au moins le lubrifiant solide consommable peut être remplacé.

22. Dispositif d'application selon l'une quelconque des revendications précédentes,
**caractérisé en ce que**
le dispositif d'application (21) est conçu de telle sorte qu'il peut être utilisé comme une protection de bras oscillant pour un cyclomoteur.

23. Dispositif d'application selon l'une quelconque des revendications 1 à 21,
**caractérisé en ce que**
le dispositif d'application est conçu de telle sorte qu'il peut être utilisé comme un guide-chaîne pour un cyclomoteur.

24. Dispositif d'application selon l'une quelconque des revendications précédentes,
**caractérisé en ce que**
le lubrifiant solide est fabriqué à base de graphite.

25. Dispositif d'application selon la revendication 24,
**caractérisé en ce que**
le lubrifiant solide présente au moins en partie du graphite.

26. Dispositif d'application selon l'une quelconque des revendications précédentes,
**caractérisé en ce que**
le lubrifiant solide présente un additif réduisant l'usure.

27. Dispositif d'application selon l'une quelconque des revendications précédentes,
**caractérisé en ce que**
le lubrifiant solide contient un additif empêchant la corrosion.

28. Dispositif d'application selon l'une quelconque des revendications précédentes,
**caractérisé en ce que**
le lubrifiant solide présente une structure de couche avec des couches différentes dans leur composition.

29. Procédé pour lubrifier une commande de chaîne (10), en particulier pour des commandes de chaîne de cyclomoteur ou similaires, comprenant un dispositif d'application (21),
**caractérisé en ce que**
le dispositif d'application comprend un dispositif à rails (26, 34, 51, 58, 62, 67, 73, 76, 80, 83, 87), le dispositif à rail venant s'appuyer par une zone de contact (50, 63, 71, 72, 75, 77, 81) de leur côté longitudinal contre une chaîne (13, 35) de la commande de chaîne, et au moins la zone de contact étant formée par un lubrifiant solide consommable qui est appliqué sur la chaîne.
